# EUROPEAN PATENT APPLICATION

(11) **EP 4 398 646 A1**
(43) Date of publication of application: **10.07.2024**
(21) Application number: 22862820.2
(22) Date of filing: 22.06.2022
(51) Int. Cl.: H04W 48/16, H04W 40/22

(54) **FIRST RELAY NODE DISCOVERY METHOD AND APPARATUS, AND STORAGE MEDIUM**

(30) Priority: 03.09.2021 CN 202111034540
(71) Applicant: Datang Mobile Communications Equipment Co., Ltd., Beijing 100085 (CN)
(72) Inventor: DENG, Qiang, Beijing 100085 (CN)
(74) Representative: Studio Torta S.p.A.
(86) International application number: PCT/CN2022/100366
(87) International publication number: WO 2023/029679

(57) **Abstract**

The present disclosure provides a first relay node discovery method and apparatus, and a storage medium. On a second relay node side, the method includes: receiving a first message, which carries an identifier of a target service; and broadcasting the first message. The first message is used to inform a second relay node to assist in discovering a first relay node capable of accessing the target service. Therefore, based on the second relay node, a remote terminal can discover the first relay node that is far away from the remote terminal through a multi-hop mode, which solves the problem that it is difficult for the remote terminal to discover the first relay node caused by the relatively long distance between the remote terminal and the first relay node.

## Description

The present disclosure claims the priority to Chinese patent application No. 202111034540.8, titled "FIRST RELAY NODE DISCOVERY METHOD AND APPARATUS, AND STORAGE MEDIUM" and filed with the China National Intellectual Property Administration on September 3, 2021, which is hereby incorporated by reference in its entirety.

### TECHNICAL FIELD

The present disclosure relates to the field of communications, and in particular to a first relay node discovery method and apparatus, and a storage medium.

### BACKGROUND

In the standards protocol of the 3rd Generation Partnership Project (3rd Generation Partnership Project, 3GPP), proximity services (Proximity Services, ProSe) in a 5G system are studied and standardized. One of the important scenarios in ProSe is that a remote terminal (Remote UE) communicates with a network through a terminal-to-network relay node (UE-to-Network Relay) (hereinafter collectively referred to as a first relay node), to obtain relevant network services.

Before the remote terminal communicates with a network device through the first relay node to obtain the relevant network services, the remote terminal needs to discover the first relay node through a discovery process and then establish a connection with the first relay node. However, the discovery process of the first relay node is subject to the distance between the remote terminal and the first relay node. When the distance between the remote terminal and the first relay node is far away, it is difficult for the remote terminal to discover the first relay node.

### SUMMARY

The present disclosure provides a first relay node discovery method and apparatus, and a storage medium, which are used to solve the problem that it is difficult for a remote terminal to discover a terminal-to-network relay node far away from the remote terminal.

In a first aspect, the present disclosure provides a first relay node discovery method, applied to a second relay node. The first relay node discovery method includes: receiving a first message, where the first message carries a service identifier of a target service, and the first message is used to inform the second relay node to assist in discovering a first relay node capable of accessing the target service; and broadcasting the first message.

In some optional implementations, the first message is used to inform the second relay node to assist a remote terminal that is to execute the target service in discovering the first relay node capable of accessing the target service; the receiving the first message includes: receiving the first message broadcast by the remote terminal; or receiving the first message, broadcast by a further second relay node, from the remote terminal; where the first message further carries a terminal identifier of the remote terminal.

In some optional implementations, the first message is used to inform the second relay node to assist the first relay node capable of accessing the target service in being discovered by the remote terminal that is to execute the target service; the receiving the first message includes: receiving the first message broadcast by the first relay node; or receiving the first message, broadcast by a further second relay node, from the first relay node; where the first message further carries a node identifier of the first relay node.

In some optional implementations, the first message further carries indication information on whether the target service is allowed to be accessed through a relay mode; where the broadcasting the first message includes: determining, according to the first message, whether the target service is allowed to be accessed through the relay mode; and broadcasting the first message if the target service is allowed to be accessed through the relay mode.

In some optional implementations, the first message further carries a remaining number of hops for which the target service is allowed to be accessed through the relay mode; where the broadcasting the first message if the target service is allowed to be accessed through the relay mode includes: determining whether the remaining number of hops for which the target service is allowed to be accessed through the relay mode is greater than or equal to 1; if the remaining number of hops is greater than or equal to 1, updating the remaining number of hops and broadcasting the first message, where the broadcast first message carries the updated remaining number of hops.

In some optional implementations, the broadcasting the first message if the target service is allowed to be accessed through the relay mode includes: if the target service is allowed to be accessed through the relay mode, determining whether a service allowed to be accessed includes the target service; and if the service allowed to be accessed includes the target service, broadcasting the first message.

In some optional implementations, before receiving the first message, further including: obtaining a policy parameter of the second relay node from a network device, where the policy parameter includes a service identifier of the service allowed to be accessed by the second relay node.

In some optional implementations, the network device includes a policy control function PCF, where the obtaining the policy parameter of the second relay node from the network device includes: sending a second message to the PCF, where the second message is used to request the policy parameter from the PCF and indicates a capability of the second relay node; and receiving the policy parameter configured by the PCF for the second relay node.

In some optional implementations, after broadcasting the first message, further including: receiving a response message returned by first relay node, where the response message is used for an indication to the second relay node to assist in informing the remote terminal that the first relay node capable of accessing the target service has been discovered; and sending the response message to the remote terminal.

In some optional implementations, after broadcasting the first message, further including: receiving a connection request message returned by the remote terminal, where the connection request message is used for an indication to the second relay node to assist the remote terminal in connecting to the first relay node capable of accessing the target service; and establishing, based on the second relay node, a communication between the remote terminal and the first relay node in response to the connection request message.

In a second aspect, the present disclosure provides a first relay node discovery method, applied to a remote terminal. The first relay node discovery method includes: determining a first target service; and broadcasting the first message carrying a service identifier of the target service and a terminal identifier of the remote terminal, where the first message is used to inform a second relay node receiving the first message to assist the remote terminal in discovering a first relay node capable of accessing the target service.

In some optional implementations, before broadcasting the first message, further including: obtaining a policy parameter of the remote terminal from a network device, where the policy parameter includes at least one of the following: a service allowed to be accessed by the remote terminal, whether the service allowed to be accessed by the remote terminal is allowed to be accessed through a relay mode, or a maximum number of hops for which the service allowed to be accessed by the remote terminal is allowed to be accessed through the relay mode.

In a third aspect, the present disclosure provides a first relay node discovery method, applied to a first relay node. The first relay node discovery method includes: determining a target service allowed to be accessed by the first relay node; and broadcasting a first message carrying a service identifier of the target service and a node identifier of the first relay node, where the first message is used to inform a second relay node receiving the first message to assist the first relay node in being discovered by a remote terminal that is to execute the target service.

In some optional implementations, before broadcasting the first message, further including: obtaining a policy parameter of the first relay node from a network device, where the policy parameter includes at least one of the following: a service allowed to be accessed by the first relay node, whether the service allowed to be accessed by the first relay node is allowed to be accessed through a relay mode, or a maximum number of hops for which the service allowed to be accessed by the first relay node is allowed to be accessed through the relay mode.

In a fourth aspect, the present disclosure provides a first relay node discovery apparatus, applied to a second relay node. The first relay node discovery apparatus includes a memory, a transceiver and a processor. The memory is configured to store a computer program; the transceiver is configured to transmit and receive data under the control of the processor; the processor is configured to read the computer program in the memory and perform the following operations: receiving a first message, where the first message carries a service identifier of a target service, and the first message is used to inform the second relay node to assist in discovering a first relay node capable of accessing the target service; and broadcasting the first message.

In some optional implementations, the first message is used to inform the second relay node to assist a remote terminal that is to execute the target service in discovering the first relay node capable of accessing the target service. The processor is further configured to perform the following operation: receiving the first message broadcast by the remote terminal; or receiving the first message, broadcast by a further second relay node, from the remote terminal; where the first message further carries a terminal identifier of the remote terminal.

In some optional implementations, the first message is used to inform the second relay node to assist the first relay node capable of accessing the target service in being discovered by the remote terminal that is to execute the target service. The processor is further configured to perform the following operation: receiving the first message broadcast by the first relay node; or receiving the first message, broadcast by a further second relay node, from the first relay node; where the first message further carries a node identifier of the first relay node.

In some optional implementations, the first message further carries indication information on whether the target service is allowed to be accessed through a relay mode. The processor is further configured to perform the following operations: determining, according to the first message, whether the target service is allowed to be accessed through the relay mode; and broadcasting the first message if the target service is allowed to be accessed through the relay mode.

In some optional implementations, the first message further carries a remaining number of hops for which the target service is allowed to be accessed through the relay mode. The processor is further configured to perform the following operations: determining whether the remaining number of hops for which the target service is allowed to be accessed through the relay mode is greater than or equal to 1; if the remaining number of hops is greater than or equal to 1, updating the remaining number of hops and broadcasting the first message, where the broadcast first message carries the updated remaining number of hops.

In some optional implementations, the processor is further configured to perform the following operations: if the target service is allowed to be accessed through the relay mode, determining whether a service allowed to be accessed includes the target service; and if the service allowed to be accessed includes the target service, broadcasting the first message.

In some optional implementations, the processor is further configured to perform the following operation: obtaining a policy parameter of the second relay node from a network device, where the policy parameter includes a service identifier of the service allowed to be accessed by the second relay node.

In some optional implementations, the network device includes a policy control function PCF, and the processor is further configured to perform the following operations: sending a second message to the PCF, where the second message is used to request the policy parameter from the PCF and indicates a capability of the second relay node; and receiving the policy parameter configured by the PCF for the second relay node.

In some optional implementations, the processor is further configured to perform the following operations: receiving a response message returned by the first relay node, where the response message is used for an indication to the second relay node to assist in informing the remote terminal that the first relay node capable of accessing the target service has been discovered; and sending the response message to the remote terminal.

In some optional implementations, the processor is further configured to perform the following operations: receiving a connection request message returned by the remote terminal, where the connection request message is used for an indication to the second relay node to assist the remote terminal in connecting to the first relay node capable of accessing the target service; and establishing, based on the second relay node, a communication between the remote terminal and the first relay node in response to the connection request message.

In a fifth aspect, the present disclosure provides a first relay node discovery apparatus, applied to a remote terminal. The first relay node discovery apparatus includes a memory, a transceiver, and a processor. The memory is configured to store a computer program; the transceiver is configured to transmit and receive data under the control of the processor; the processor is configured to read the computer program in the memory and perform the following operations: determining a first target service; and broadcasting a first message carrying a service identifier of the target service and a terminal identifier of the remote terminal, where the first message is used to inform a second relay node receiving the first message to assist the remote terminal in discovering a first relay node capable of accessing the target service.

In some optional implementations, the processor is further configured to perform the following operation: obtaining a policy parameter of the remote terminal from a network device, where the policy parameter includes at least one of the following: a service allowed to be accessed by the remote terminal, whether the service allowed to be accessed by the remote terminal is allowed to be accessed through a relay mode, or a maximum number of hops for which the service allowed to be accessed by the remote terminal is allowed to be accessed through the relay mode.

In a sixth aspect, the present disclosure provides a first relay node discovery apparatus, applied to a first relay node. The first relay node discovery apparatus includes a memory, a transceiver, and a processor. The memory is configured to store a computer program; the transceiver is configured to transmit and receive data under the control of the processor; the processor is configured to read the computer program in the memory and perform the following operations: determining a target service allowed to be accessed by the first relay node; and broadcasting a first message carrying a service identifier of the target service and a node identifier of the first relay node, where the first message is used to inform a second relay node receiving the first message to assist the first relay node in being discovered by a remote terminal that is to execute the target service.

In some optional implementations, the processor is further configured to perform the following operation: obtaining a policy parameter of the first relay node from a network device, where the policy parameter includes at least one of the following: a service allowed to be accessed by the first relay node, whether the service allowed to be accessed by the first relay node is allowed to be accessed through a relay mode, or a maximum number of hops for which the service allowed to be accessed by the first relay node is allowed to be accessed through the relay mode.

In a seventh aspect, the present disclosure provides a first relay node discovery apparatus, applied to a second relay node. The first relay node discovery apparatus includes: a receiving unit, configured to receive a first message, where the first message carries a service identifier of a target service, and the first message is used to inform the second relay node to assist in discovering a first relay node capable of accessing the target service; and a transmitting unit, configured to broadcast the first message.

In some optional implementations, the first message is used to inform the second relay node to assist a remote terminal that is to execute the target service in discovering the first relay node capable of accessing the target service; the receiving unit is specifically configured to: receive the first message broadcast by the remote terminal; or receive the first message, broadcast by a further second relay node, from the remote terminal; where the first message further carries a terminal identifier of the remote terminal.

In some optional implementations, the first message is used to inform the second relay node to assist the first relay node capable of accessing the target service in being discovered by the remote terminal that is to execute the target service; the receiving unit is specifically configured to: receive the first message broadcast by the first relay node; or receive the first message, broadcast by a further second relay node, from the first relay node; where the first message further carries a node identifier of the first relay node.

In some optional implementations, the first message further carries indication information on whether the target service is allowed to be accessed through a relay mode; the transmitting unit is specifically configured to: determine, according to the first message, whether the target service is allowed to be accessed through the relay mode; and broadcast the first message if the target service is allowed to be accessed through the relay mode.

In some optional implementations, the first message further carries a remaining number of hops for which the target service is allowed to be accessed through the relay mode; the transmitting unit is specifically configured to: determine whether the remaining number of hops for which the target service is allowed to be accessed through the relay mode is greater than or equal to 1; if the remaining number of hops is greater than or equal to 1, update the remaining number of hops and broadcast the first message, where the broadcast first message carries the updated remaining number of hops.

In some optional implementations, the transmitting unit is specifically configured to: if the target service is allowed to be accessed through the relay mode, determine whether a service allowed to be accessed includes the target service; and if the service allowed to be accessed includes the target service, broadcast the first message.

In some optional implementations, the first relay node discovery apparatus further includes: a configuration unit, configured to obtain a policy parameter of the second relay node from a network device, where the policy parameter includes a service identifier of the service allowed to be accessed by the second relay node.

In some optional implementations, the network device includes a policy control function PCF, and the configuration unit is specifically configured to: send a second message to the PCF, where the second message is used to request the policy parameter from the PCF, and the second message indicates a capability of the second relay node; and receive the policy parameter configured by the PCF for the second relay node.

In some optional implementations, the receiving unit is further configured to: receive a response message returned by the first relay node, where the response message is used for an indication to the second relay node to assist in informing the remote terminal that the first relay node capable of accessing the target service has been discovered; and send the response message to the remote terminal.

In some optional implementations, the receiving unit is further configured to: receive a connection request message returned by the remote terminal, where the connection request message is used for an indication to the second relay node to assist the remote terminal in connecting to the first relay node capable of accessing the target service; and establish, based on the second relay node, a communication between the remote terminal and the first relay node in response to the connection request message.

In an eighth aspect, the present disclosure provides a first relay node discovery apparatus, applied to a remote terminal. The first relay node discovery apparatus includes: a determining unit, configured to determine a first target service; and a transmitting unit, configured to broadcast the first message carrying a service identifier of the target service and a terminal identifier of the remote terminal, where the first message is used to inform a second relay node receiving the first message to assist the remote terminal in discovering the first relay node capable of accessing the target service.

In some optional implementations, the first relay node discovery apparatus further includes: a configuration unit, configured to obtain a policy parameter of the remote terminal from a network device, where the policy parameter includes at least one of the following: a service allowed to be accessed by the remote terminal, whether the service allowed to be accessed by the remote terminal is allowed to be accessed through a relay mode, or a maximum number of hops for which the service allowed to be accessed by the remote terminal is allowed to be accessed through the relay mode.

In a ninth aspect, the present disclosure provides a first relay node discovery apparatus, applied to a first relay node. The first relay node discovery apparatus includes: a determining unit, configured to determine a target service allowed to be accessed by the first relay node; and a transmitting unit, configured to broadcast a first message carrying a service identifier of the target service and a node identifier of the first relay node, where the first message is used to inform a second relay node receiving the first message to assist the first relay node in being discovered by a remote terminal that is to execute the target service.

In some optional implementations, the first relay node discovery apparatus further includes: a configuration unit, configured to obtain a policy parameter of the first relay node from a network device, where the policy parameter includes at least one of the following: a service allowed to be accessed by the first relay node, whether the service allowed to be accessed by the first relay node is allowed to be accessed through a relay mode, or a maximum number of hops for which the service allowed to be accessed by the first relay node is allowed to be accessed through the relay mode.

In a tenth aspect, the present disclosure provides a processor-readable storage medium. The processor-readable storage medium stores a computer program, which is used to cause a processor to execute the first relay node discovery method according to the first aspect, the second aspect, or the third aspect.

In an eleventh aspect, the present disclosure provides a computer-readable storage medium, which stores thereon a computer program. The computer program is used to cause a computer to execute the first relay node discovery method according to the first aspect, the second aspect, or the third aspect.

In a twelfth aspect, the present disclosure provides a computer program product containing instructions which, when running on a computer, cause the computer to perform the first relay node discovery method according to the first aspect, the second aspect, or the third aspect.

In a thirteenth aspect, the present disclosure provides a communication system, including any one of the first relay nodes, at least one of the second relay nodes, and any one of the remote terminals mentioned above.

The present disclosure provides a first relay node discovery method and apparatus, and a storage medium. In the method, after receiving the first message, the second relay node broadcasts the first message, where the first message carries the service identifier of the target service, and the first message is used to inform the second relay node to assist in discovering the first relay node capable of accessing the target service. Therefore, during the process of discovering the first relay node, the remote terminal discovers the first relay node through multiple hops based on the second relay node, rather than discovering the first relay node directly, which increases a distance range in which the first relay node is discovered, expands the coverage of the network, and solves the problem that it is difficult for the remote terminal to discover the first relay node when the remote terminal is far away from the first relay node.

It should be understood that what is described in the SUMMARY section above is not intended to limit key or important features of the embodiments of the present invention, nor is it intended to limit the scope of the present invention. Other features of the present invention will be easily understood through the following description.

### BRIEF DESCRIPTION OF DRAWINGS

In order to describe the technical solutions in the present disclosure or in the prior art more clearly, drawings that need to be used in the description of embodiments or prior art will be introduced briefly in the following. Obviously, the drawings described below are intended for some embodiments of the present invention, and those of ordinary skill in the art can obtain other drawings based on these drawings without paying creative efforts.
FIG. 1 is an illustrative diagram of a network architecture of ProSe in a 5G system;
FIG. 2 is a schematic diagram of an application scenario provided by an embodiment of the present disclosure;
FIG. 3 is a flowchart of a first relay node discovery method provided by an embodiment of the present disclosure;
FIG. 4 is a flowchart of a first relay node discovery method provided by another embodiment of the present disclosure;
FIG. 5 is a flowchart of a first relay node discovery method provided by another embodiment of the present disclosure;
FIG. 6 is a schematic flowchart of configuring a policy parameter by a network device for a terminal (the terminal may be a first relay node, a second relay node, or a remote terminal) according to an embodiment of the present disclosure;
FIG. 7 is a schematic structural diagram of a first relay node discovery apparatus provided by an embodiment of the present disclosure;
FIG. 8 is a schematic structural diagram of a first relay node discovery apparatus provided by another embodiment of the present disclosure;
FIG. 9 is a schematic structural diagram of a first relay node discovery apparatus provided by another embodiment of the present disclosure;
FIG. 10 is a schematic structural diagram of a first relay node discovery apparatus provided by another embodiment of the present disclosure;
FIG. 11 is a schematic structural diagram of a first relay node discovery apparatus provided by another embodiment of the present disclosure; and
FIG. 12 is a schematic structural diagram of a first relay node discovery apparatus provided by another embodiment of the present disclosure.

### DESCRIPTION OF EMBODIMENTS

In the present disclosure, "at least one" refers to one or more, and "a plurality of' refers to two or more. "And/or" describes an association relationship between the associated objects, which means that there can be three kinds of relationships, for example, A and/or B can mean that A exists alone, both A and B exist, and B exists alone, where A, B may be singular or plural. The character "/" generally indicates that the associated objects before and after are in an "or" relationship. "At least one (item) of the following" or similar expressions refer to any combination of these (items), including any combination of single items or plural items. For example, at least one (item) of a, b, or c can represent a, b, c, a-b, a-c, b-c, or a-b-c, where a, b, and c may be singular or plural.

It can be understood that each step or operation in the embodiments of the present disclosure is merely an example, and other operations or variations of various operations can also be performed in the embodiments of the present disclosure. Furthermore, the various steps may be performed in a different order from that presented in the embodiments of the present disclosure, and it is possible that not all operations in the embodiments of the present disclosure need to be performed.

The technical solutions in the embodiments of the present disclosure will be clearly and completely described below with reference to the accompanying drawings in the embodiments of the present disclosure. Obviously, the described embodiments are merely part of the embodiments of the present disclosure, rather than all of the embodiments. Based on the embodiments in the present disclosure, all other embodiments obtained by those of ordinary skill in the art without creative work shall fall within the protection scope of the present disclosure.

First, parts of the present disclosure are explained to facilitate understanding by those skilled in the art.

Remote terminal (referred to as Relay UE): a terminal that cannot be directly connected to a network due to reasons such as being outside the coverage of the network or poor signal quality of a cellular network communication interface (referred to as a Uu interface, the communication interface between the terminal and the network).

Terminal-to-network relay node (it may be referred to as a UE-to-Network Relay) (hereinafter collectively referred to as a first relay node): a terminal with a relay function, which, on one side, registers to the network through the Uu interface and establishes a protocol data unit (Protocol Data Unit, PUD) session and a quality of service (Quality of Service, QOS) flow to achieve communications between the terminal itself and the network; and which, on the other side, communicates with a remote terminal or a terminal-to-terminal relay node through a direct communication interface (it may be referred to as a PC5 interface, a communication interface between terminals), and forwards the communication data of the remote terminal to the network to achieve the purpose of communications between the remote terminal and the network.

Terminal-to-terminal relay node (it may be referred to as a UE-to-UE Relay) (hereinafter collectively referred to as a second relay node): a terminal with a relay function, which communicates, on both sides, with other terminals through the PC5 interface, and forwards the communication data of a terminal on one side thereof to a terminal on the other side thereof to establish the communication between different terminals.

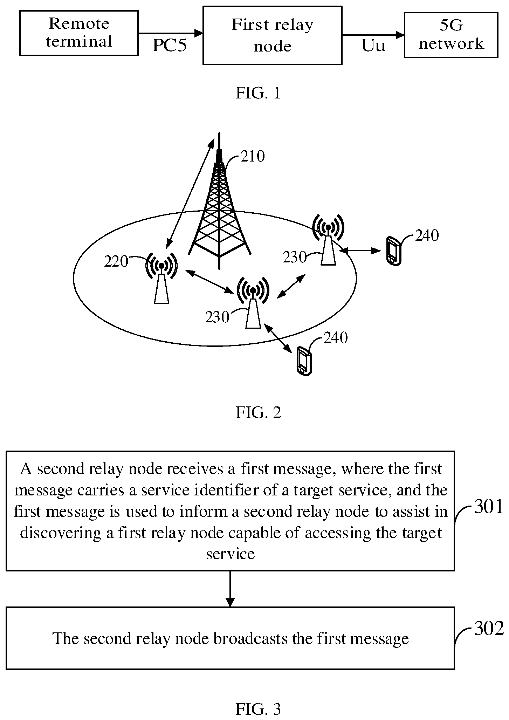

Reference is made to FIG. 1, which is an illustrative diagram of a network architecture of ProSe in a 5G system. The remote terminal communicates with the first relay node through the PC5 interface, and the first relay node forwards the communication data from the remote terminal to the 5G network through the Uu interface to realize communications between the remote terminal and the network. Before the remote terminal communicates with the first relay node, it is first necessary to discover the first relay node.

In the solution for discovering the first relay node, the remote terminal is only supported to discover the first relay node through one hop, but the remote terminal is not supported to discover the first relay node through multiple hops. Therefore, in some scenarios (for example, in a forest, or in a basement), the remote terminal is far away from the first relay node, and it is difficult for the remote terminal to discover the first relay node, resulting in the remote terminal being unable to connect to the network.

In order to solve the problem mentioned above, in a first relay node discovery method and apparatus, and a storage medium provided by the embodiments of the present disclosure, after receiving a first message carrying a service identifier of a target service, the second relay node broadcasts the first message, to assist in discovering the first relay node capable of accessing the target service. Therefore, it is realized that the remote terminal discovers the first relay node through multiple hops, expanding the distance range in which the remote terminal can discover the first relay node, expanding the coverage of the network, and improving the success rate of the remote terminal connecting to the network, and moreover, it is also beneficial to save the power consumption of the remote terminal.

The method and the apparatus are based on the same application concept. Since the principles of the method and the apparatus to solve the problem are similar, cross reference can be made to the implementations of the apparatus and the method, and the repetitive details will not be repeated.

The technical solutions provided by the embodiments of the present disclosure can be applied to a variety of systems, especially the 5G system. For example, applicable systems may be a global system of mobile communication (global system of mobile communication, GSM), a code division multiple access (code division multiple access, CDMA) system, a wideband code division multiple access (Wideband Code Division Multiple Access, WCDMA), a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile system (universal mobile telecommunication system, UMTS), a worldwide interoperability for microwave access (worldwide interoperability for microwave access, WiMAX) system, a 5G new radio (New Radio, NR) system, etc. These various systems include terminals and network devices. The systems can also include a core network part, such as an evolved packet system (Evloved Packet System, EPS), a 5G system (5GS), and so on.

The terminal involved in the embodiments of the present disclosure may be a device that provides voice and/or data connectivity to users, a handheld device with a wireless connection function, or other processing devices connected to a wireless modem, etc. In different systems, the terminal may vary in terms of its name. For example, in the 5G system, the terminal may be called user equipment (User Equipment, UE). A wireless terminal can communicate with one or more core networks (Core Networks, CNs) via a radio access network (Radio Access Network, RAN). The wireless terminal may be a mobile terminal, such as a mobile phone (or called "cellular" phone) or a computer with a mobile terminal, which may be, for example, a portable, pocket-sized, handheld, computer-built-in or vehicle-mounted mobile device, exchanging voice and/or data with the radio access network. For example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) and other devices. The wireless terminal may also be called a system, a subscriber unit (subscriber unit), a subscriber station (subscriber station), a mobile station (mobile station), a mobile console (mobile), a remote station (remote station), an access point (access point), a remote terminal (remote terminal), an access terminal (access terminal), a user terminal (user terminal), a user agent (user agent), and a user device (user device), which are not limited in the embodiments of the present disclosure.

The network device involved in the embodiments of the present disclosure may be a base station, which may include a plurality of cells that provide services for terminals. Depending on the specific application scenario, the base station may also be called an access point, or a device in the access network that communicates with the wireless terminal through one or more sectors over an air interface, or other names. The network device may be used to interchange received airframes with Internet protocol (Internet Protocol, IP) packets to act as a router between the wireless terminal and the rest of the access network, and the rest of the access network may include an Internet protocol (IP) communication network. The network device may also coordinate attribute management of the air interface. For example, the network device involved in the embodiments of the present disclosure may be a network device (Base Transceiver Station, BTS) in a global system for mobile communications (Global System for Mobile communications, GSM) or a code division multiple access (Code Division Multiple Access, CDMA), a network device (NodeB) in a wide-band code division multiple access (Wide-band Code Division Multiple Access, WCDMA), or an evolutional network device (evolutional Node B, eNB or e-NodeB) in a long term evolution (long term evolution, LTE) system, a 5G base station (gNB) in the 5G network architecture (next generation system), or a home evolved Node B (Home evolved Node B, HeNB), a relay node (relay node), a home base station (femto), a pico base station (pico), etc., which are not limited in the embodiments of the present disclosure. In some network structures, a network device may include a centralized unit (centralized unit, CU) node and a distributed unit (distributed unit, DU) node, and the centralized unit and distributed unit may also be arranged geographically separately.

One or more antennas can be used for multi input multi output (Multi Input Multi Output, MIMO) transmission between the network device and the terminal. The MIMO transmission may be single user MIMO (Single User MIMO, SU-MIMO) or multiple user MIMO (Multiple User MIMO, MU-MIMO). Depending on the pattern and number of root antenna combinations, the MIMO transmission may be 2D-MIMO, 3D-MIMO, FD-MIMO or massive-MIMO, or it may be diversity transmission, precoding transmission or beamforming transmission, etc.

Reference is made to FIG. 2, which is a schematic diagram of an application scenario provided by an embodiment of the present disclosure. As shown in FIG. 2, this embodiment provides a communication system, which includes a network device 210, a first relay node 220, a second relay node 230, and a remote terminal 240. The remote terminal 240 can discover the first relay node 220 through one or more second relay nodes 230. In FIG. 2, two remote terminals 240 and two second relay nodes 230 are taken as an example. One remote terminal 240 discovers the first relay node 220 through one second relay node 230 (the remote terminal 240 discovers the first relay node 220 through two hops), and another remote terminal 240 discovers the first relay node 220 through two second relay nodes 230 in sequence (the remote terminal 240 discovers the first relay node 220 through three hops).

Reference is made to FIG. 3, which is a flowchart of a first relay node discovery method provided by an embodiment of the present disclosure. As shown in FIG. 3, the method in this embodiment may include:
S301, a second relay node receives a first message, where the first message carries a service identifier of a target service, and the first message is used to inform a second relay node to assist in discovering a first relay node capable of accessing the target service.

The first relay node capable of accessing the target service may be understood as the first relay node that supports the target service and is capable of providing a further terminal with a service related to the target service. In other words, the further terminal can communicate with a network through the first relay node, for executing the target service. The target service is for example an Internet service.

The service identifier of the target service is unique, that is, the service identifiers of different services are different.

In this embodiment, a second relay node can receive the first message from a remote terminal or the first relay node. After determining the target service to be executed, the remote terminal can send outwards the first message carrying the service identifier of the target service, to inform the second relay node receiving the first message to assist the remote terminal in discovering the first relay node capable of accessing the target service. Alternatively, after the first relay node determines the target service accessible to itself, the first relay node can broadcast outwards the first message carrying the service identifier of the target service. In this way, for the second relay node, if there is a remote terminal that needs to execute the target service, the first relay node that provides services for the remote terminal can be quickly determined through the first message broadcast by the second relay node.

S302, the second relay node broadcasts the first message.

In this embodiment, the second relay node broadcasts the first message outwards through a direct communication interface, to expand the propagation range of the first message, so that in case the distance between the remote terminal and the first relay node is relatively long, it is possible to assist in discovering the first relay node that can access the target service.

In case the first message is from the remote terminal, the second relay node broadcasts the first message so that the first relay node or a further second relay node receives the first message. If the first relay node receives the first message, the first relay node determines whether to respond to the first message, based on whether the first relay node itself is capable of accessing the target service. If the first relay node is capable of accessing the target service, it responds to the first message, thereby completing the discovery of the first relay node. If a further second relay node receives the first message, the further second relay node can proceed with broadcasting the first message outwards, so that the first relay node farther away can receive the first message, expanding the range of discovery of the first relay node.

In case the first message is from the first relay node, the second relay node can determine whether there is a remote terminal that needs to execute the target service; if it is determined that there is the remote terminal, the second relay node sends the message to the remote terminal through the direct communication interface, to notify the remote terminal, through the message, that the first relay node providing a communication service for the remote terminal is discovered, and transfers first information, that is from the first relay node, to other second relay nodes through broadcasting, so that the first relay node is discovered by the remote terminal farther away, expanding the range where the first relay node is discovered; if it is determined that there is no remote terminal that needs to execute the target service, the second relay node transfers the first information that is from the first relay node to other second relay nodes by means of broadcasting, so that the first relay node is discovered by a farther remote terminal, expanding the range where the first relay node is discovered.

Therefore, in this embodiment, in case the remote terminal is far away from the first relay node, it can be realized based on the second relay node and the first message carrying the service identifier that the remote terminal discovers through multiple hops (at least two hops: passing through one second relay node is equivalent to two hops, including one hop from the remote terminal to the second relay node and one hop from the second relay node to the first relay node; the number of hops is greater than 2 when passing through a plurality of second relay nodes) the first relay node that is capable of accessing a first service of the remote terminal, expanding the range for discovering the first relay node, and expanding the coverage of the network.

It can be seen from the embodiments mentioned above that the discovery of the first relay node can be achieved through two modes: in one mode, the remote terminal announces outwards a service in need through the first message, and with the assistance of the second relay node, actively discovers the first relay node that can access a corresponding service; in the other mode, the first relay node announces outwards a service accessible to itself through the first message, and with the assistance of the second relay node, is discovered by a remote terminal in need of the corresponding service. Therefore, through these two different modes, the flexibility of first relay node discovery is improved.

These two modes will be further described later through embodiments.

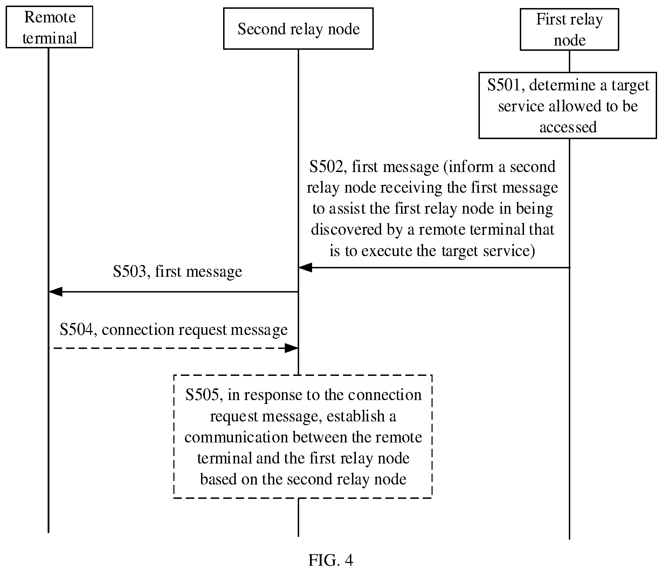

Reference is made to FIG. 4, which is a schematic flowchart of a first relay node discovery method provided by another embodiment of the present disclosure. As shown in FIG. 4, the method in this embodiment may include:
S401, a remote terminal determines a first target service.

In some embodiments, the first target service may be a target service to be executed.

In this embodiment, the remote terminal is pre-configured with services that the remote terminal is allowed to access. The remote terminal can determine, according to a user's request or a default configuration of its own system, the first target service among the services that are allowed to be accessed. Herein, there is no limitation on how to determine the first target service.

S402, the remote terminal broadcasts a first message carrying a service identifier of the target service and a terminal identifier of the remote terminal, where the first message is used to inform a second relay node receiving the first message to assist the remote terminal in discovering the first relay node capable of accessing the target service.

The terminal identifier of the remote terminal is unique.

In some optional implementations, the terminal identifier of the remote terminal may be an application layer user identifier of the remote terminal. The application layer user identifier of the remote terminal is, for example, a user name registered on an application program of the remote terminal. Therefore, the terminal identifier of the remote terminal is associated with a service, which is helpful in improving the accuracy of discovery of the first relay node for different services and different remote terminals.

In this embodiment, after determining the first target service, the remote terminal obtains the service identifier of the target service and the terminal identifier of the remote terminal, and generates the first message carrying the service identifier of the target service and the terminal identifier of the remote terminal. Then, the remote terminal broadcasts the first message through a direct communication interface, to announce, by broadcasting the first message, outwards that the remote terminal needs to execute the target service, and in particular, inform the second relay node receiving the first message to assist the remote terminal in discovering the first relay node capable of accessing the target service.

S403, the second relay node receiving the first message broadcasts the first message.

In this embodiment, after receiving the first message, the second relay node obtains the service identifier of the target service and the terminal identifier of the remote terminal from the first message, to learn that the remote terminal is to execute the target service. In order to assist the remote terminal in discovering the first relay node capable of accessing the target service, the second relay node broadcasts the first message through the direct communication interface to facilitate reception of the first message by a further second relay node far away from the remote terminal, especially to facilitate reception of the first message by the first relay node far away from the remote terminal.

The first message received by the second relay node may be the first message broadcast by the remote terminal, or may be the first message, broadcast by a further second relay node, from the remote terminal.

In some optional implementations, in addition to the service identifier of the target service and the terminal identifier of the remote terminal, the first message broadcast by the second relay node further carries a node identifier of the second relay node. Therefore, through the terminal identifier of the remote terminal and the node identifier(s) of one or more second relay nodes carried in the first message, the second relay node that the remote terminal passes through in the process of discovering the first relay node through multiple hops can be determined, to put it briefly, facilitate the determination of the path of the multi-hop process through identifiers information. Therefore, after the subsequent discovery of the first relay node capable of accessing the target service, information relevant to the first relay node can be returned to the remote terminal one by one according to the path obtained through the identifiers information, so as to establish, according to the path obtained through the identifiers information, a communication between the remote terminal and the first relay node capable of accessing the target service.

In some optional implementations, the node identifier of the second relay node adopts an application layer user identifier of the second relay node.

In some optional implementations, as shown in FIG. 4, after the second relay node broadcasts the first message, this embodiment further includes:
S404, the second relay node receives a response message returned by the first relay node capable of accessing the target service, where the response message is used for an indication to the second relay node to assist in informing the remote terminal that the first relay node capable of accessing the target service has been discovered.

The response message returned by the first relay node carries the service identifier of the target service and a node identifier of the first relay node, so that the second relay node exactly learns, according to the service identifier of the target service and the node identifier of the first relay node in the first message, that the first relay node can access the target service.

In this embodiment, after receiving the first message broadcast by the second relay node, the first relay node obtains the service identifier of the target service and the node identifier of the second relay node from the first message. The first relay node determines, according to the service identifier of the target service, whether a service allowed to be accessed by itself includes the target service. If the service allowed to be accessed by the first relay node includes the target service (that is, if the first relay node can access the target service), the first relay node returns the response message to the second relay node according to the node identifier of the second relay node, otherwise, it does not respond to the first message.

S405, the second relay node sends a response message to the remote terminal.

The response message sent by the second relay node to the remote terminal carries the service identifier of the target service, the node identifier of the first relay node, and the node identifier of the second relay node, enabling the remote terminal to determine, according to the service identifier of the target service, which specific service to be executed by itself is the target service that the first relay node can access, and also facilitating subsequent establishment of a communication connection across a path composed of the remote terminal, the second relay node, the first relay node and the network based on the node identifier of the first relay node and the node identifier of the second relay node.

In this embodiment, the second relay node can obtain the service identifier of the target service and the node identifier of the first relay node from the response message, to obtain that the first relay node can access the target service. Then, the second relay node adds its own node identifier in the response message, or regenerates a new response message according to the service identifier of the target service, the node identifier of the first relay node, and the node identifier of the second relay node. Next, the second relay node determines, according to the service identifier of the target service, a path through which the first message is transmitted to the second relay node, and sends a response message to the remote terminal according to the path. The second relay node sending the response message to the remote terminal may be that the second relay node directly sends the response message to the remote terminal, or the second relay node sends the response message to a previous second relay node in the path through which the first message is transmitted.

Therefore, this embodiment provides one of the modes that can be adopted in the first relay node discovery process. In this mode, the remote terminal that is to execute the target service broadcasts the first message, and the second relay node receiving the first message then broadcasts the first message, ..., until the first relay node that can access the target service receives the first message. During the entire process, the remote terminal actively discovers the first relay node with the help of the second relay node(s) through multiple hops, thereby the remote terminal can discover the first relay node that is further away from itself, effectively expanding the range of discovery of the first relay node and the coverage of the network.

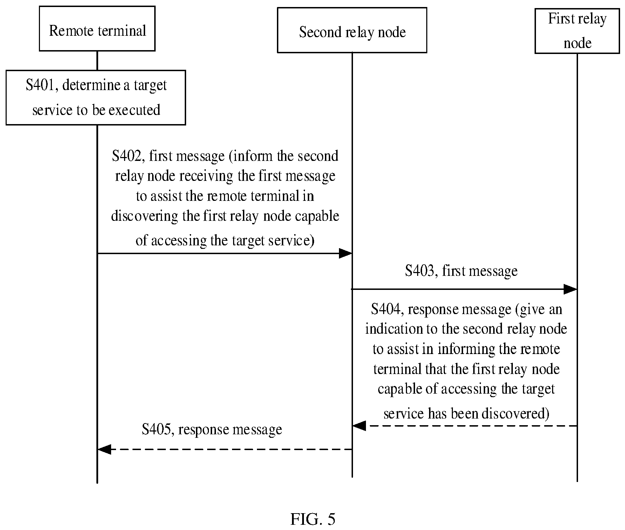

Reference is made to FIG. 5, which is a schematic flowchart of a first relay node discovery method provided by another embodiment of the present disclosure. As shown in FIG. 5, the method in this embodiment may include:
S501, a first relay node determines a target service allowed to be accessed; and
S502, the first relay node broadcasts a first message carrying a service identifier of the target service and a node identifier of the first relay node, where the first message is used to inform a second relay node receiving the first message to assist the first relay node in being discovered by a remote terminal that is to execute the target service.

In this embodiment, the first relay node is pre-configured with one or more target services allowed to be accessed by the first relay node. The target service allowed to be accessed by the first relay node embodies a capability of the first relay node, and the first relay node can announce its own capability by broadcasting the first message outwards. After determining the target service allowed to be accessed, the first relay node can obtain the service identifier of the target service and its own node identifier, generate the first message carrying the service identifier of the target service and its own node identifier, and then, broadcast the first message outwards through a direct communication interface, so that the second relay node, which is closer to the remote terminal than the first relay node, receives the first message, and then the second relay node proceeds with broadcasting the second message, to assist the first relay node in being discovered by the remote terminal that is to execute the target service.

In some optional implementations, the node identifier of the first relay node adopts an application layer user identifier of the first relay node.

S503, the second relay node receiving the first message broadcasts the first message.

In this embodiment, after receiving the first message, the second relay node obtains the service identifier of the target service and the terminal identifier of the first relay node from the first message, to learn that the first relay node can access the target service. In order to assist the first relay node in being discovered by the remote terminal that is found to execute, the second relay node broadcasts the first message through the direct communication interface, to facilitate a further second relay node that is close to the remote terminal to receive the first message, in particular, it is convenient for the remote terminal to receive the first message.

The first message received by the second relay node may be the first message broadcast by the first relay node, or may be the first message, broadcast by a further second relay node, from the first relay node.

In some optional implementations, in addition to the service identifier of the target service and the terminal identifier of the first relay node, the first message broadcast by the second relay node further carries a node identifier of the second relay node. Therefore, through the terminal identifier of the first relay node and the node identifier(s) of one or more second relay nodes carried in the first message, the second relay node passed through in a process during which the first relay node is discovered by the remote terminal through multiple hops can be determined, simply put, it is convenient to determine the path of the multi-hop process through the identifiers information. Furthermore, after receiving the first message, the remote terminal that is to subsequently execute the target service can establish a communication between the remote terminal and the first relay node according to the path obtained through the identifiers information.

In some optional implementations, as shown in FIG. 5, after the second relay node broadcasts the first message, this embodiment further includes:
S504, the second relay node receives a connection request message returned by the remote terminal, where the connection request response message is used for an indication to the second relay node to assist in informing the remote terminal to connect to the first relay node capable of accessing the target service.

In this embodiment, after receiving the first message broadcast by the second relay node, the remote terminal obtains the service identifier of the target service from the first message, and determines, according to the service identifier of the target service, whether the target service is a service to be executed by itself. If the target service is the service to be executed by the remote terminal, the remote terminal returns the connection request message to the second relay node according to the node identifier of the second relay node in the first message, where the connection request message indicates that the remote terminal chooses to connect to the second relay node, and then the communication with the first relay node can be achieved.

If the target service is not the service to be executed by the remote terminal, no response is made to the first message.

S505, in response to the connection request message, establish a communication between the remote terminal and the first relay node based on the second relay node.

In this embodiment, after receiving the first message from the remote terminal, the second relay node establishes a connection with the remote terminal, and establishes a connection with a further second relay node or the first relay node based on the path through which the first message is transmitted, so as to realize the communication between the remote terminal and the first relay node through one or more second relay nodes. Herein, there is no restriction on the specific establishment process of the connection.

Therefore, this embodiment provides another mode that can be adopted in the first relay node discovery process. In this mode, the first relay node that can access the target service announces outwards, by broadcasting the first message, the capability that it can access the target service, the second relay node receiving the first message then broadcasts the first message, ..., until the remote terminal that is to execute the target service receives the first message. In the whole process, the first relay node is discovered by the first relay node through multiple hops with the help of the second relay node(s), which helps the remote terminal to discover the first relay node far away from itself, effectively expanding the range of discovery of the first relay node and coverage of the network.

Based on any of the foregoing embodiments, in some optional implementations, the first message further carries indication information on whether the target service is allowed to be accessed through a relay mode, in other words, the first message further carries the indication information on whether the target service is a service that is allowed to be accessed through the relay mode, or in other words, the first message further carries executive information on whether the target service is allowed to be relayed. As such, after the second relay node receives the first message, the process of broadcasting the first message includes: determining, according to the first message, whether the target service is allowed to be accessed through the relay mode; if the target service is allowed to be accessed through the relay mode, then broadcasting the first message.

In this embodiment, the second relay node obtains from the first message the indication information on whether the target service is allowed to be accessed through the relay mode. If the indication information indicates that the target service is allowed to be accessed through the relay mode, it means that the remote terminal can execute the target service in a way of communicating with the network through the relay node, and the second relay node broadcasts the first message through a direct communication interface. If the indication information indicates that the target service is not allowed to be accessed through the relay mode, it means that the remote terminal cannot execute the target service in a way of communicating with the network through the relay node, and the second relay node would not broadcast the first message through the direct communication interface, at that point, the remote terminal needs to be directly connected to the network to execute the target service. Therefore, services that are not allowed to be accessed through the relay mode are filtered, and the accuracy of the second relay node proceeding with broadcasting the first message is improved.

Further, in some optional implementations, the first message further carries the remaining number of hops for which the target service is allowed to be accessed through the relay mode. When the remote terminal or the first relay node broadcasts the first message, the remaining number of hops carried in the first message is the maximum number of hops for which the target service is allowed to be accessed through the relay mode. When the second relay node broadcasts the first message, the remaining number of hops carried in the first message is the number of hops leftover after subtracting the occurred hop(s) from the maximum number of hops. For example, if the first message broadcast by the remote terminal carries a maximum number of 10 hops for which the target service is allowed to be accessed through the relay mode, then after the leading second relay node broadcasts the first message, the first message carries a remaining number of 9 hops for which the target service is allowed to be accessed through the relay mode.

On the basis that the first message further carries the remaining number of hops for which the target service is allowed to be accessed through the relay mode, after determining that the target service is allowed to be accessed through the relay mode, the second relay node broadcasting the first message further includes: the second relay node determining whether the remaining number of hops for which the target service is allowed to be accessed through the relay mode is greater than or equal to 1; if the remaining number of hops for which the target service is allowed to be accessed through the relay mode is greater than or equal to 1, the second relay node updating the remaining number of hops and broadcasting the first message, where the broadcast first message carries the updated remaining number of hops.

In this embodiment, the second relay node obtains from the received first message the remaining number of hops for which the target service is allowed to be accessed through the relay mode, if the remaining number of hops is greater than or equal to 1, it means that the access process of the target service can further accommodate more relay nodes, and therefore the second relay node broadcasts the first message through the direct communication interface; otherwise, the second relay node does not broadcast the first message. Therefore, filter the first message unconformable to the allowed number of hops, to prevent the second relay node from forwarding the first message indefinitely.

Based on any of the foregoing embodiments, in some optional implementations, the second relay node is pre-configured with a service that the second relay node is allowed to access. At this time, the process of the second relay node broadcasting the first message further includes: the second relay node determining whether the service that is allowed to be accessed by itself includes the target service; if the service that is allowed to be accessed by the second relay node includes the target service, the second relay node broadcasting the first message.

In this embodiment, the second relay node can determine, according to the service identifier of the target service carried in the first message, whether the target service is included in the service that the second relay node is allowed to access; if so, it means that the second relay node can access the target service, and the second relay node broadcasts the first message; otherwise, the second relay node does not broadcast the first message. Therefore, by pre-configuring for the second relay node the service that is allowed to be accessed, the second relay node only relays the service accessible to itself, thereby reducing the burden on the second relay node and improving the management effect of the second relay node.

It should be noted that the filtering conditions mentioned above can be combined with each other. For example, if the target service is allowed to be accessed through the relay mode and the target service is the service that the second relay node is allowed to access, the second relay node broadcasts the first message; for another example, if the target service is allowed to be accessed through the relay mode, and the remaining number of hops for which the target service is allowed to be accessed through the relay mode is greater than or equal to 1, and the target service is the service that the second relay node is allowed to access, the second relay node broadcasts the first message.

Based on any of the foregoing embodiments, in some optional implementations, the network device may pre-configure a policy parameter of the first relay node for the first relay node. At this time, the first relay node discovery method further includes: the first relay node obtaining the policy parameter of the first relay node from a network device, where the policy parameter includes at least one of the following: a service that is allowed to be accessed by the first relay node, whether the service that is allowed to be accessed by the first relay node is allowed to be accessed through the relay mode, or the maximum number of hops for which the service that is allowed to be accessed by the first relay node is allowed to be accessed through the relay mode. Therefore, the management effect on the first relay node and the service allowed to be accessed by the first relay node is improved. When broadcasting the first message, the first relay node can generate the first message according to the policy parameter.

The first relay node obtaining the policy parameter of the first relay node from the network device may be that the first relay node actively requests the network device to configure the policy parameter, or the network device actively configures the policy parameter for the first relay node. For example, when the first relay node is powered on, the first relay node actively requests the network device to configure the policy parameter; for another example, when the communication between the network device and the first relay node is successfully established, the network device actively configures the policy parameter for the first relay node.

Further, in some optional implementations, the network device includes a policy control function (Policy Control Function, PCF), through which the policy parameter can be configured for the first relay node. At this time, the first relay node obtaining the policy parameter of the first relay node from the network device includes: the first relay node sending a second message to the PCF, where the second message is used to request the policy parameter from the PCF, and the second message indicates a capability of the first relay node; and the first relay node receiving the policy parameter configured by the PCF for the first relay node. The second message indicates the capability of the first relay node, that is, the second message indicates that the first relay node is a terminal-to-network relay node, that is, it indicates the role or function assumed by the first relay node, such that the PCF can accurately configure the policy parameter for the first relay node according to the capability of the first relay node.

Based on any of the foregoing embodiments, in some optional implementations, the network device may pre-configure a policy parameter of the second relay node for the second relay node. At this time, the first relay node discovery method further includes: the second relay node obtaining the policy parameter of the second relay node from the network device, where the policy parameter includes at least one of the following: a service allowed to be accessed by the second relay node. Therefore, the management effect of the second relay node and the service allowed to be accessed by the second relay node is improved. When broadcasting the first message, the second relay node can determine whether to broadcast the first message according to the policy parameter, specific details of which can refer to the relevant content mentioned above and will not be repeated.

The second relay node obtaining the policy parameter of the second relay node from the network device may be that the second relay node actively requests the network device to configure the policy parameter, or the network device may actively configure the policy parameter for the second relay node. For example, when the second relay node is powered on, the second relay node actively requests the network device to configure the policy parameter; for another example, when the communication between the network device and the second relay node is successfully established, the network device actively configures the policy parameter for the second relay node.

Further, in some optional implementations, the network device includes a policy control function (Policy Control Function, PCF), through which the policy parameter can be configured for the second relay node. At this time, the second relay node obtaining the policy parameter of the second relay node from the network device includes: the second relay node sending a second message to the PCF, where the second message is used to request the policy parameter from the PCF, and the second message indicates a capability of the second relay node; and the second relay node receives the policy parameter configured by the PCF for the second relay node. The second message indicates the capability of the second relay node, that is, the second message indicates that the second relay node is a terminal-to-terminal relay node, that is, it indicates the role or function assumed by the second relay node, such that the PCF can accurately configure the policy parameter for the second relay node according to the capability of the second relay node.

Based on any of the foregoing embodiments, in some optional implementations, the network device may pre-configure a policy parameter of the remote terminal for the remote terminal. At this time, the first relay node discovery method further includes: the remote terminal obtaining the policy parameter of the remote terminal from the network device, where the policy parameter includes at least one of the following: a service allowed to be accessed by the remote terminal, whether the service allowed to be accessed by the remote terminal is allowed to be accessed through the relay mode, or the maximum number of hops for which the service allowed to be accessed by the remote terminal is allowed to be accessed through the relay mode. Therefore, the management effect on the remote terminal and the service allowed to be accessed by the remote terminal is improved. When broadcasting the first message, the remote terminal can generate the first message according to the policy parameter.

The remote terminal obtaining the policy parameter of the remote terminal from the network device may be that the remote terminal actively requests the network device to configure the policy parameter, or the network device may actively configure the policy parameter for the remote terminal. For example, when the remote terminal is powered on, the remote terminal actively requests the network device to configure the policy parameter; for another example, when the communication between the network device and the remote terminal is successfully established, the network device actively configures the policy parameter for the remote terminal.

Further, in some optional implementations, the network device includes a policy control function (Policy Control Function, PCF), through which the policy parameter can be configured for the remote terminal. At this time, the remote terminal obtaining the policy parameter of the second relay node from the network device includes: the remote terminal sending a second message to the PCF, where the second message is used to request the policy parameter from the PCF, and the second message indicates a capability of the remote terminal; and the remote terminal receiving the policy parameter configured by the PCF for the remote terminal. The second message indicates the capability of the remote terminal, that is, the second message indicates that a terminal sending the second message is the remote terminal, so that the PCF can accurately configure the policy parameter for the remote terminal.

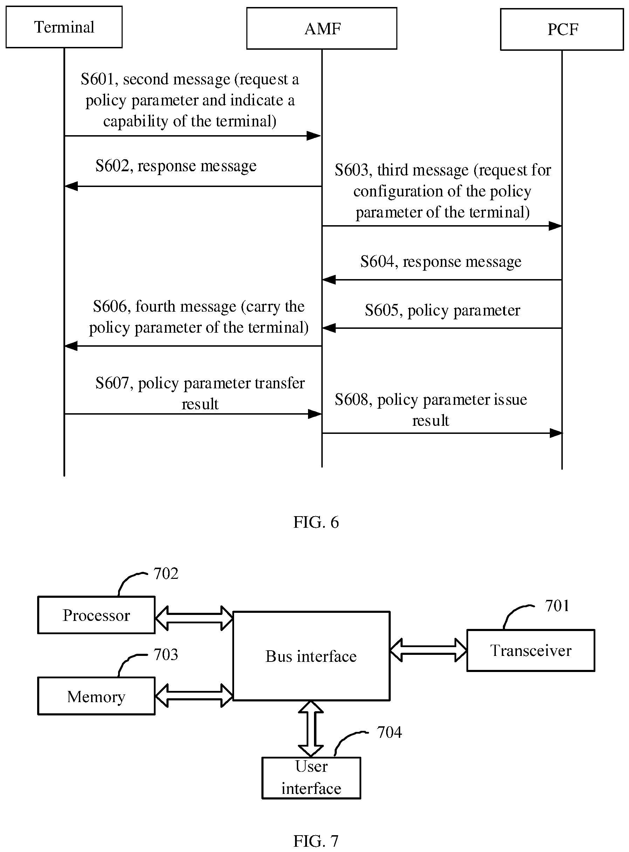

Reference is made to FIG. 6, which is a schematic flowchart of configuring a policy parameter by a network device for a terminal (the terminal may be a first relay node, a second relay node, or a remote terminal) according to an embodiment of the present disclosure. As shown in FIG. 6, the process for configuring the policy parameter includes:
S601, a terminal sends a second message to an access and mobility management function (Access and Mobility Management Function, AMF) in a network device, where the second message is used to request a policy parameter from a PCF, and the second message indicates a capability of the terminal.

In this embodiment, the terminal sends the second message to the AMF, for example, in a ProSe service, the second message is a registration request (Registration Request) message, to request the PCF to provide a ProSe policy parameter, and the second message indicates a capability of the terminal in the ProSe service, for example, the second message indicates that the terminal supports the remote terminal, the first relay node, or the second relay node that provides a connection for the first relay node, in the ProSe service.

S602, the AMF returns a response message of the second message to the terminal.

In this embodiment, the response message is used to inform the terminal that the AMF has received the second message.

For example, in the ProSe service, the AMF returns a registration accept (Registration Accept) message to the terminal, after completing the registration process.

S603, the AMF sends a third message to the PCF, to request the PCF to configure the policy parameter of the terminal.

In this embodiment, the third message is used to request the PCF to configure the policy parameter of the terminal, and the third message indicates the capability of the terminal, so that the PCF configures the policy parameter for the terminal according to the capability of the terminal.

S604, the PCF returns a response message of the third message to the AMF.

In this embodiment, the response message is used to inform the AMF that the PCF has received the third message.

S605, the PCF sends the policy parameter to the AMF.

In this embodiment, the policy parameters provided by the PCF are different according to the different capabilities of the terminal, specific details of which can refer to the policy parameter of the first relay node, the policy parameter of the second relay node, and the policy parameter of the remote terminal in the embodiments mentioned above, which will not be repeated.

S606, the AMF returns a fourth message to the terminal, where the fourth message carries the policy parameter of the terminal.

The fourth message may be a non-access-stratum (Non-Access-Stratum, NAS) message.

S607, the terminal returns a policy parameter transfer result to the AMF.

The policy parameter transfer result is used to inform the AMF whether the terminal has received the policy parameter successfully.

S608, the AMF returns a policy parameter issue result to the PCF.

The policy parameter issue result is used to inform the PCF whether the terminal has received the policy parameter successfully.

Therefore, in this implementation, corresponding policy parameters are configured for the first relay node, the second relay node, and the remote terminal based on the AMF and the PCF in the network device, so that the first relay node, the second relay node, and the remote terminal perform the first relay node discovery process in any of the embodiments mentioned above based on their respective policy parameters, enabling the remote terminal to discover the first relay node through multiple hops.

On the terminal side, an embodiment of the present disclosure provides a first relay node discovery apparatus, and the first relay node discovery apparatus in this embodiment may be a second relay node. As shown in FIG. 7, the first relay node discovery apparatus may include a transceiver 701, a processor 702, and a memory 703.

Transceiver 701 is configured to receive and transmit data under the control of processor 702.

In FIG. 7, a bus architecture may include any number of interconnected buses and bridges, which are linked together specifically by various circuits of one or more processors represented by processor 702 and a memory represented by memory 703. The bus architecture can also link together various other circuits such as a peripheral device, a voltage regulator, a power management circuit, and so on, which are all well-known in the art and therefore will not be described further herein. A bus interface provides an interface. Transceiver 701 may be a plurality of elements, that is, including a transmitter and a receiver, providing a unit for communicating with various other apparatuses over transmission media including wireless channels, wired channels, optical cables, and so on. In some optional implementations, the first relay node discovery apparatus may also include a user interface 704. For different user devices, user interface 704 may also be an interface capable of connecting externally or internally a required device. The connected device includes but is not limited to a keypad, a display, a speaker, a microphone, a joystick, and so on.

Processor 702 is responsible for managing the bus architecture and general processing, and memory 703 can store data used by processor 702 when performing operations.

In some optional implementations, processor 702 may be a central processing unit (central processing unit, CPU), an application specific integrated circuit (Application Specific Integrated Circuit, ASIC), or a field-programmable gate array (Field-Programmable Gate Array, FPGA) or a complex programmable logic device (Complex Programmable Logic Device, CPLD). Processor 702 can also adopt a multi-core architecture.

Processor 702 is configured to execute any method related to the second relay node provided by the embodiment of the present disclosure according to the obtained executable instructions by invoking a computer program stored in memory 703. The processor and memory may also be physically separated.

Specifically, the processor 702 is configured to perform the following operations: receiving a first message, where the first message carries a service identifier of a target service, and the first message is used to inform the second relay node to assist in discovering a first relay node capable of accessing the target service; and broadcasting the first message.

In some optional implementations, the first message is used to inform the second relay node to assist a remote terminal that is to execute the target service in discovering the first relay node capable of accessing the target service. The processor 702 is further configured to perform the following operation: receiving the first message broadcast by the remote terminal; or receiving the first message, broadcast by a further second relay node, from the remote terminal; where the first message further carries a terminal identifier of the remote terminal.

In some optional implementations, the first message is used to inform the second relay node to assist the first relay node capable of accessing the target service in being discovered by the remote terminal that is to execute the target service; the processor 702 is further configured to perform the following operation: receiving the first message broadcast by the first relay node; or receiving the first message, broadcast by a further second relay node, from the first relay node; where the first message further carries a node identifier of the first relay node.

In some optional implementations, the first message further carries indication information on whether the target service is allowed to be accessed through a relay mode; the processor 702 is further configured to perform the following operations: determining, according to the first message, whether the target service is allowed to be accessed through the relay mode; and broadcasting the first message if the target service is allowed to be accessed through the relay mode.

In some optional implementations, the first message further carries the remaining number of hops for which the target service is accessed through the relay mode; the processor 702 is further configured to perform the following operation: determining whether the remaining number of hops for which the target service is accessed through the relay mode is greater than or equal to 1; if the remaining number of hops is greater than or equal to 1, updating the remaining number of hops and broadcasting the first message, where the broadcast first message carries the updated remaining number of hops.

In some optional implementations, the processor 702 is further configured to perform the following operation: if the target service is allowed to be accessed through the relay mode, determining whether a service allowed to be accessed includes the target service; and if the service allowed to be accessed includes the target service, broadcasting the first message.

In some optional implementations, the processor 702 is further configured to perform the following operation: obtaining a policy parameter of the second relay node from a network device, where the policy parameter includes a service identifier of the service allowed to be accessed by the second relay node.

In some optional implementations, the network device includes a policy control function PCF, and the processor 702 is further configured to perform the following operation: sending a second message to the PCF, where the second message is used to request the policy parameter from the PCF and indicates a capability of the second relay node; and receiving the policy parameter configured by the PCF for the second relay node.

In some optional implementations, the processor 702 is further configured to perform the following operation: receiving a response message returned by the first relay node, where the response message is used for an indication to the second relay node to assist in informing the remote terminal that the first relay node capable of accessing the target service has been discovered; and sending the response message to the remote terminal.

In some optional implementations, the processor 702 is further configured to perform the following operation: receiving a connection request message returned by the remote terminal, where the connection request message is used for an indication to the second relay node to assist the remote terminal in connecting to the first relay node capable of accessing the target service; and establishing, based on the second relay node, a communication between the remote terminal and the first relay node in response to the connection request message.

It should be noted here that the above apparatus provided by the present disclosure is capable of implementing all the method steps implemented by the second relay node in the above method embodiments and is capable of achieving the same technical effect. The parts and beneficial effects of this embodiment which are same as those in the method embodiments will not be described in detail here.

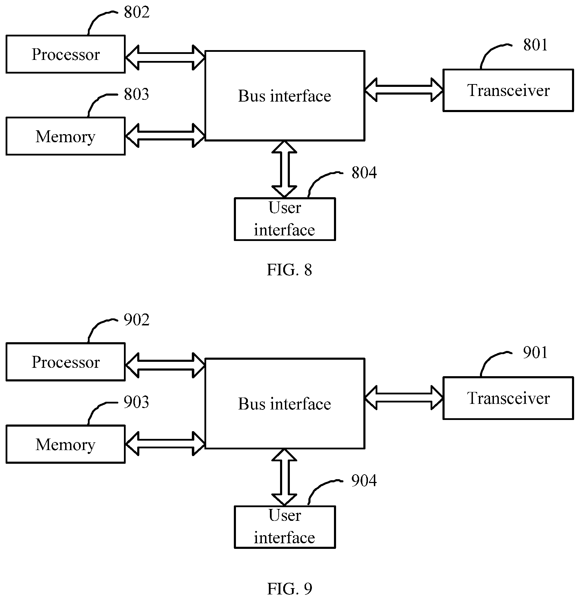

On the terminal side, an embodiment of the present disclosure provides a first relay node discovery apparatus. The first relay node discovery apparatus in this embodiment may be a remote terminal. As shown in FIG. 8, the first relay node discovery apparatus may include a transceiver 801, a processor 802, and a memory 803.

Transceiver 801 is configured to receive and send data under the control of processor 802.

In FIG. 8, a bus architecture may include any number of interconnected buses and bridges, which are linked together specifically by various circuits of one or more processors represented by processor 802 and a memory represented by memory 803. The bus architecture can also link together various other circuits such as a peripheral device, a voltage regulator, a power management circuit, and so on, which are all well-known in the art and therefore will not be described further herein. A bus interface provides an interface. Transceiver 801 may be a plurality of elements, that is, including a transmitter and a receiver, providing a unit for communicating with various other apparatuses over transmission media including wireless channels, wired channels, optical cables, and so on. In some optional implementations, the first relay node discovery apparatus may also include a user interface 804. For different user devices, user interface 804 may also be an interface capable of connecting externally or internally a required device. The connected device includes but is not limited to a keypad, a display, a speaker, a microphone, a joystick, and so on.

Processor 802 is responsible for managing the bus architecture and general processing, and memory 803 can store data used by processor 802 when performing operations.

In some optional implementations, processor 802 may be a central processing unit (central processing unit, CPU), an application specific integrated circuit (Application Specific Integrated Circuit, ASIC), or a field-programmable gate array (Field-Programmable Gate Array, FPGA) or a complex programmable logic device (Complex Programmable Logic Device, CPLD). Processor can also adopt a multi-core architecture.

Processor 802 is configured to execute any method related to the remote terminal provided by the embodiment of the present disclosure according to the obtained executable instructions by invoking a computer program stored in memory 803. The processor and memory may also be physically separated.

Specifically, the processor 802 is configured to perform the following operations: determining a first target service; and broadcasting a first message carrying a service identifier of the target service and a terminal identifier of the remote terminal, where the first message is used to inform a second relay node receiving the first message to assist the remote terminal in discovering a first relay node capable of accessing the target service.

In some optional implementations, the processor 802 is further configured to perform the following operation: obtaining a policy parameter of the remote terminal from a network device, where the policy parameter includes at least one of the following: a service allowed to be accessed by the remote terminal, whether the service allowed to be accessed by the remote terminal is allowed to be accessed through a relay mode, or the maximum number of hops for which the service allowed to be accessed by the remote terminal is allowed to be accessed through the relay mode.

It should be noted here that the above apparatus provided by the present disclosure is capable of implementing all the method steps implemented by the remote terminal in the above method embodiments and is capable of achieving the same technical effect. The parts and beneficial effects of this embodiment which are same as those in the method embodiments will not be described in detail here.

On the terminal side, an embodiment of the present disclosure provides a first relay node discovery apparatus, and the first relay node discovery apparatus in this embodiment may be the first relay node. As shown in FIG. 9, the first relay node discovery apparatus may include a transceiver 901, a processor 902, and a memory 903.

Transceiver 901 is configured to receive and send data under the control of processor 902.

In FIG. 9, a bus architecture may include any number of interconnected buses and bridges, which are linked together specifically by various circuits of one or more processors represented by processor 902 and a memory represented by memory 903. The bus architecture can also link together various other circuits such as a peripheral device, a voltage regulator, a power management circuit, and so on, which are all well-known in the art and therefore will not be described further herein. A bus interface provides an interface. Transceiver 901 may be a plurality of elements, that is, including a transmitter and a receiver, providing a unit for communicating with various other apparatuses over transmission media including wireless channels, wired channels, optical cables, and so on. In some optional implementations, the first relay node discovery apparatus may also include a user interface 904. For different user devices, user interface 904 may also be an interface capable of connecting externally or internally a required device. The connected device includes but is not limited to a keypad, a display, a speaker, a microphone, a joystick, and so on.

Processor 902 is responsible for managing the bus architecture and general processing, and memory 903 can store data used by processor 902 when performing operations.

In some optional implementations, processor 902 may be a central processing unit (central processing unit, CPU), an application specific integrated circuit (Application Specific Integrated Circuit, ASIC), or a field-programmable gate array (Field-Programmable Gate Array, FPGA) or a complex programmable logic device (Complex Programmable Logic Device, CPLD). Processor 902 can also adopt a multi-core architecture.

Processor 902 is configured to execute any method related to the first relay node provided by the embodiment of the present disclosure according to the obtained executable instructions by invoking a computer program stored in memory 903. The processor and memory may also be physically separated.

Specifically, the processor 902 is configured to perform the following operations: determining a target service allowed to be accessed by the first relay node; and broadcasting a first message carrying a service identifier of the target service and a node identifier of the first relay node, where the first message is used to inform a second relay node receiving the first message to assist the first relay node in being discovered by a remote terminal that is to execute the target service.

In some optional implementations, the processor 902 is further configured to perform the following operation: obtaining a policy parameter of the first relay node from a network device, where the policy parameter includes at least one of the following: a service allowed to be accessed by the first relay node, whether the service allowed to be accessed by the first relay node is allowed to be accessed through a relay mode, or the maximum number of hops for which the service allowed to be accessed by the first relay node is allowed to be accessed through the relay mode.

It should be noted here that the above apparatus provided by the present disclosure is capable of implementing all the method steps implemented by the first relay node in the above method embodiments and is capable of achieving the same technical effect. The parts and beneficial effects of this embodiment which are same as those in the method embodiments will not be described in detail here.

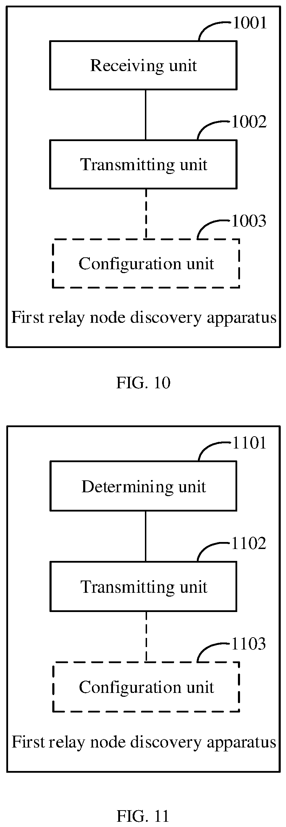

On the terminal side, an embodiment of the present disclosure further provides a first relay node discovery apparatus, and the first relay node discovery apparatus in this embodiment may be the second relay node. As shown in FIG. 10, the first relay node discovery apparatus includes: a receiving unit 1001 and a transmitting unit 1002. The receiving unit 1001 is configured to receive a first message, where the first message carries a service identifier of a target service, and the first message is used to inform the second relay node to assist in discovering a first relay node capable of accessing the target service. The transmitting unit 1002 is configured to broadcast the first message.

In some optional implementations, the first message is used to inform the second relay node to assist a remote terminal that is to execute the target service in discovering the first relay node capable of accessing the target service; and the receiving unit 1001 is specifically configured to: receive the first message broadcast by the remote terminal; or receive the first message, broadcast by a further second relay node, from the remote terminal; where the first message further carries a terminal identifier of the remote terminal.

In some optional implementations, the first message is used to inform the second relay node to assist the first relay node capable of accessing the target service in being discovered by the remote terminal that is to execute the target service; the receiving unit 1001 is specifically configured to: receive the first message broadcast by the first relay node; or receive the first message, broadcast by a further second relay node, from the first relay node; where the first message further carries a node identifier of the first relay node.

In some optional implementations, the first message further carries indication information on whether the target service is allowed to be accessed through a relay mode; and the transmitting unit 1002 is specifically configured to: determine, according to the first message, whether the target service is allowed to be accessed through the relay mode; and broadcast the first message if the target service is allowed to be accessed through the relay mode.

In some optional implementations, the first message further carries the remaining number of hops for which the target service is accessed through the relay mode; and the transmitting unit 1002 is specifically configured to: determine whether the remaining number of hops for which the target service is accessed through the relay mode is greater than or equal to 1; if the remaining number of hops is greater than or equal to 1, update the remaining number of hops and broadcast the first message, where the broadcast first message carries the updated remaining number of hops.

In some optional implementations, the transmitting unit 1002 is specifically configured to: if the target service is allowed to be accessed through the relay mode, determine whether a service allowed to be accessed includes the target service; and if the service allowed to be accessed includes the target service, broadcast the first message.

In some optional implementations, the first relay node discovery apparatus further includes: a configuration unit 1003, configured to obtain a policy parameter of the second relay node from a network device, where the policy parameter includes a service identifier of the service allowed to be accessed by the second relay node.

In some optional implementations, the network device includes a policy control function PCF, and the configuration unit 1003 is specifically configured to: send a second message to the PCF, where the second message is used to request the policy parameter from the PCF, and the second message indicates a capability of the second relay node; and receive the policy parameter configured by the PCF for the second relay node.

In some optional implementations, the receiving unit 1001 is further configured to: receive a response message returned by the first relay node, where the response message is used for an indication to the second relay node to assist in informing the remote terminal that the first relay node capable of accessing the target service has been discovered; and send the response message to the remote terminal.

In some optional implementations, the receiving unit 1001 is further configured to: receive a connection request message returned by the remote terminal, where the connection request message is used for an indication to the second relay node to assist the remote terminal in connecting to the first relay node capable of accessing the target service; and establish, based on the second relay node, a communication between the remote terminal and the first relay node in response to the connection request message.

It should be noted here that the above apparatus provided by the present disclosure is capable of implementing all the method steps implemented by the second relay node in the above method embodiments and is capable of achieving the same technical effect. The parts and beneficial effects of this embodiment which are same as those in the method embodiments will not be described in detail here.

On the terminal side, an embodiment of the present disclosure further provides a first relay node discovery apparatus, and the first relay node discovery apparatus in this embodiment may be the remote terminal. As shown in FIG. 11, the first relay node discovery apparatus includes: a determining unit 1101 and a transmitting unit 1102.

The determining unit 1101 is configured to determine a first target service. The transmitting unit 1102 is configured to broadcast a first message carrying a service identifier of the target service and a terminal identifier of the remote terminal, where the first message is used to inform a second relay node receiving the first message to assist the remote terminal in discovering the first relay node capable of accessing the target service.

In some optional implementations, the first relay node discovery apparatus further includes: a configuration unit 1103, configured to obtain a policy parameter of the remote terminal from a network device, where the policy parameter includes at least one of the following: a service allowed to be accessed by the remote terminal, whether the service allowed to be accessed by the remote terminal is allowed to be accessed through a relay mode, or the maximum number of hops for which the service allowed to be accessed by the remote terminal is allowed to be accessed through the relay mode.

It should be noted here that the above apparatus provided by the present disclosure is capable of implementing all the method steps implemented by the remote terminal in the above method embodiments and is capable of achieving the same technical effect. The parts and beneficial effects of this embodiment which are same as those in the method embodiments will not be described in detail here.

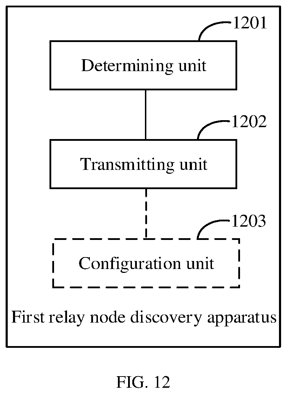

On the terminal side, an embodiment of the present disclosure further provides a first relay node discovery apparatus, and the first relay node discovery apparatus in this embodiment may be the first relay node. As shown in FIG. 12, the first relay node discovery apparatus includes: a determining unit 1201 and a transmitting unit 1202.

The determining unit 1201 is configured to determine a target service allowed to be accessed by the first relay node.

The transmitting unit 1202 is configured to broadcast a first message carrying a service identifier of the target service and a node identifier of the first relay node, where the first message is used to inform a second relay node receiving the first message to assist the first relay node in being discovered by a remote terminal that is to execute the target service.

In some optional implementations, the first relay node discovery apparatus further includes: a configuration unit 1203, configured to obtain a policy parameter of the first relay node from a network device, where the policy parameter includes at least one of the following: a service allowed to be accessed by the first relay node, whether the service allowed to be accessed by the first relay node is allowed to be accessed through a relay mode, or the maximum number of hops for which the service allowed to be accessed by the first relay node is allowed to be accessed through the relay mode.

It should be noted here that the above apparatus provided by the present disclosure is capable of implementing all the method steps implemented by the first relay node in the above method embodiments and is capable of achieving the same technical effect. The parts and beneficial effects of this embodiment which are same as those in the method embodiments will not be described in detail here.

It should be noted that the division of units in the embodiments of the present disclosure is illustrative and is only a logical function division, and there may be other division manners in actual implementations. In addition, the functional units in the embodiments of the present disclosure may be integrated in a single processing unit, or each unit may be physically present separately, or two or more units may be integrated in a single unit. The above integrated units may be implemented either in the form of hardware or in the form of software functional units.

The integrated units may be stored in a processor-readable storage medium when implemented in the form of software function units and sold or used as an independent product. Based on such understanding, a technical solution of the present disclosure in essence, or the part of the technical solution which makes a contribution to the prior art, or all or part of the technical solution may be embodied in the form of a software product. The computer software product is stored in a storage medium, including several instructions for causing a computer device (which may be a personal computer, a server, or a network device, etc.) or a processor (processor) to execute all or part of the steps of the methods in the various embodiments of the present disclosure. The aforementioned storage medium includes various media that can store program codes, such as a U disk, a mobile hard disk, a read-only memory (Read-Only Memory, ROM), a random access memory (Random Access Memory, RAM), a magnetic disk or an optical disk.

On the terminal side, an embodiment of the present disclosure provides a processor-readable storage medium, which stores thereon a computer program. The computer program is used to cause a processor to execute any method, which is related to the second relay node, the remote terminal, and the first relay node, provided in the embodiments of the present disclosure, so that the processor is capable of implementing all the method steps implemented by the terminal in the above method embodiments and is capable of achieving the same technical effect. The parts and beneficial effects of this embodiment which are the same as those in the method embodiments will not be described in detail here.

The processor-readable storage medium may be any available medium or data storage device that can be accessed by a processor, including but not limited to a magnetic storage (such as a floppy disk, a hard disk, a magnetic tape, a magneto-optical disk (MO), etc.), an optical storage (such as a CD, a DVD, a BD, an HVD, etc.), and a semiconductor storage (such as a ROM, an EPROM, an EEPROM, a non-volatile memory (NAND FLASH), a solid state disk (SSD)), etc.

Those skilled in the art should understand that the embodiments of the present disclosure may be provided as methods, systems, or computer program products. Accordingly, the present disclosure may take the form of an entirely hardware embodiment, an entirely software embodiment or an embodiment combining software and hardware aspects. Also, the present disclosure may take the form of a computer program product embodied on one or more computer-usable storage media (including but not limited to a disk storage and an optical storage, etc.) containing computer-usable program codes therein.

The present disclosure is described with reference to flowcharts and/or block diagrams of methods, apparatuses, and computer program products according to the embodiments of the present disclosure. It should be understood that each procedure and/or block in the flowcharts and/or block diagrams, and combinations of procedures and/or blocks in the flowcharts and/or block diagrams may be implemented by the computer-executable instructions. These computer-executable instructions may be provided to a processor of a general-purpose computer, a special-purpose computer, an embedded processor, or other programmable data processing devices to produce a machine, such that an apparatus for implementing a function specified in one or more procedures of the flowcharts and/or one or more blocks of the block diagrams may be produced via the instructions executed by the processor of the computer or other programmable data processing devices.

These processor-executable instructions may also be stored in a processor-readable memory capable of directing a computer or other programmable data processing devices to operate in a specific manner, so that the instructions stored in the processor-readable memory produce a manufacturing product including an instruction apparatus, where the instruction apparatus implements the function specified in one or more procedures of the flowcharts and/or one or more blocks of the block diagrams.

These processor-executable instructions may also be loaded onto a computer or other programmable data processing devices, so that a series of operational steps are performed on the computer or other programmable devices to produce computer-implemented processing. Therefore, the instructions executed on the computer or other programmable devices provide steps for implementing the functions specified in one or more procedures of the flowcharts and/or one or more blocks of the block diagrams.

Obviously, those skilled in the art can make various changes and variations to the present disclosure without departing from the spirit and scope of the disclosure. In this way, if these modifications and variations of the present disclosure fall within the scope of the claims of the present disclosure and equivalent technologies thereof, the present disclosure is also intended to include these modifications and variations.

## Claims

1. A first relay node discovery method, **characterized by** being applied to a second relay node, comprising: receiving a first message, wherein the first message carries a service identifier of a target service, and the first message is used for an indication to assist in discovering a first relay node capable of accessing the target service; and broadcasting the first message.

2. The first relay node discovery method according to claim 1, wherein the first message is used for an indication to assist a remote terminal in discovering the first relay node capable of accessing the target service;
wherein the receiving the first message comprises: receiving the first message broadcast by the remote terminal; or receiving the first message, broadcast by a further second relay node, from the remote terminal; wherein the first message further carries a terminal identifier of the remote terminal.

3. The first relay node discovery method according to claim 1, wherein the first message is used for an indication to assist the first relay node capable of accessing the target service in being discovered; wherein the receiving the first message comprises;
receiving the first message broadcast by the first relay node; or receiving the first message, broadcast by a further second relay node, from the first relay node; wherein the first message further carries a node identifier of the first relay node.

4. The first relay node discovery method according to any one of claims 1 to 3, wherein the first message further carries indication information on whether the target service is allowed to be accessed through a relay mode; wherein the broadcasting the first message comprises: determining, according to the first message, whether the target service is allowed to be accessed through the relay mode; and broadcasting the first message if the target service is allowed to be accessed through the relay mode.

5. The first relay node discovery method according to claim 4, wherein the first message further carries a remaining number of hops for which the target service is allowed to be accessed through the relay mode; wherein the broadcasting the first message if the target service is allowed to be accessed through the relay mode comprises: determining whether the remaining number of hops for which the target service is allowed to be accessed through the relay mode is greater than or equal to 1; if the remaining number of hops is greater than or equal to 1, updating the remaining number of hops and broadcasting the first message, wherein the broadcast first message carries the updated remaining number of hops.

6. The first relay node discovery method according to claim 4, wherein the broadcasting the first message if the target service is allowed to be accessed through the relay mode comprises: if the target service is allowed to be accessed through the relay mode, determining whether a service allowed to be accessed by the second relay node comprises the target service; and if the service allowed to be accessed by the second relay node comprises the target service, broadcasting the first message.

7. The first relay node discovery method according to claim 6, before receiving the first message, further comprising: obtaining a policy parameter of the second relay node from a network device, wherein the policy parameter comprises a service identifier of the service allowed to be accessed by the second relay node.

8. The first relay node discovery method according to claim 7, wherein the network device comprises a policy control function PCF, and the obtaining the policy parameter of the second relay node from the network device comprises: sending a second message to the PCF, wherein the second message is used to request the policy parameter from the PCF and indicates a capability of the second relay node; and receiving the policy parameter configured by the PCF for the second relay node.

9. The first relay node discovery method according to claim 2, after broadcasting the first message, further comprising: receiving a response message returned by the first relay node, wherein the response message is used for an indication to the second relay node to assist in informing the remote terminal that the first relay node capable of accessing the target service has been discovered; and sending the response message to the remote terminal.

10. The first relay node discovery method according to claim 3, after broadcasting the first message, further comprising: receiving a connection request message returned by the remote terminal, wherein the connection request message is used for an indication to assist the remote terminal in connecting to the first relay node capable of accessing the target service; and establishing, based on the second relay node, a communication between the remote terminal and the first relay node in response to the connection request message.

11. A first relay node discovery method, **characterized by** being applied to a remote terminal, comprising: determining a first target service; and broadcasting a first message carrying a service identifier of the first target service and a terminal identifier of the remote terminal, wherein the first message is used for an indication to a second relay node receiving the first message to assist the remote terminal in discovering a first relay node capable of accessing the target service.

12. A first relay node discovery method, **characterized by** being applied to a first relay node, comprising: determining a target service allowed to be accessed by the first relay node; and broadcasting a first message carrying a service identifier of the target service and a node identifier of the first relay node, wherein the first message is used for an indication to a second relay node receiving the first message to assist the first relay node in being discovered.

13. A first relay node discovery apparatus, **characterized by** being applied to a second relay node, wherein the first relay node discovery apparatus comprises a memory, a transceiver and a processor;
the memory is configured to store a computer program;
the transceiver is configured to transmit and receive data under the control of the processor;
the processor is configured to read the computer program in the memory and perform the following operations: receiving a first message, wherein the first message carries a service identifier of a target service, and the first message is used for an indication to assist in discovering a first relay node capable of accessing the target service; and broadcasting the first message.

14. The first relay node discovery apparatus according to claim 13, wherein the first message is used for an indication to assist a remote terminal that is to execute the target service in discovering the first relay node capable of accessing the target service;
the processor is further configured to perform the following operation: receiving the first message broadcast by the remote terminal; or receiving the first message, broadcast by a further second relay node, from the remote terminal; wherein the first message further carries a terminal identifier of the remote terminal.

15. The first relay node discovery apparatus according to claim 13, wherein the first message is used for an indication to assist the first relay node capable of accessing the target service in being discovered by a remote terminal that is to execute the target service; wherein the processor is further configured to perform the following operations: receiving the first message broadcast by the first relay node; or receiving the first message, broadcast by a further second relay node, from the first relay node; wherein the first message further carries a node identifier of the first relay node.

16. A first relay node discovery apparatus, **characterized by** being applied to a remote terminal, wherein the first relay node discovery apparatus comprises a memory, a transceiver and a processor;
the memory is configured to store a computer program;
the transceiver is configured to transmit and receive data under the control of the processor;
the processor is configured to read the computer program in the memory and perform the following operations: determining a first target service; and broadcasting a first message carrying a service identifier of the first target service and a terminal identifier of the remote terminal, wherein the first message is used for an indication to a second relay node receiving the first message to assist the remote terminal in discovering a first relay node capable of accessing the target service.

17. A first relay node discovery apparatus, **characterized by** being applied to a first relay node, wherein the first relay node discovery apparatus comprises a memory, a transceiver and a processor;
the memory is configured to store a computer program;
the transceiver is configured to transmit and receive data under the control of the processor;
the processor is configured to read the computer program in the memory and perform the following operations: determining a target service allowed to be accessed by the first relay node; and broadcasting a first message carrying a service identifier of the target service and a node identifier of the first relay node, wherein the first message is used for an indication to a second relay node receiving the first message to assist the first relay node in being discovered by a remote terminal that is to execute the target service.

18. A first relay node discovery apparatus, **characterized by** being applied to a second relay node, wherein the first relay node discovery apparatus comprises: a receiving unit, configured to receive a first message, wherein the first message carries a service identifier of a target service, and the first message is used for an indication to assist in discovering a first relay node capable of accessing the target service; and a transmitting unit, configured to broadcast the first message.

19. A first relay node discovery apparatus, **characterized by** being applied to a remote terminal, wherein the first relay node discovery apparatus comprises: a determining unit, configured to determine a first target service; and a transmitting unit, configured to broadcast a first message carrying a service identifier of the first target service and a terminal identifier of the remote terminal, wherein the first message is used for an indication to a second relay node receiving the first message to assist the remote terminal in discovering a first relay node capable of accessing the target service.

20. A first relay node discovery apparatus, **characterized by** being applied to a first relay node, wherein the first relay node discovery apparatus comprises: a determining unit, configured to determine a target service allowed to be accessed by the first relay node; and a transmitting unit, configured to broadcast a first message carrying a service identifier of the target service and a node identifier of the first relay node, wherein the first message is used for an indication to a second relay node receiving the first message to assist the first relay node in being discovered by a remote terminal that is to execute the target service.

21. A computer-readable storage medium, which stores thereon a computer program, **characterized in that** the computer program is used to cause the computer to execute the first relay node discovery method according to any one of claims 1 to 12.
